# EUROPÄISCHE PATENTSCHRIFT

(11) **EP 0 757 943 B1**
(45) Veröffentlichungstag und Bekanntmachung des Hinweises auf die Patenterteilung: **07.11.2001**
(21) Anmeldenummer: 96112352.8
(22) Anmeldetag: 31.07.1996
(51) Int. Cl.: B60H 1/00

(54) **Verfahren zur Regelung der Innenraumtemperatur in der Fahrgastzelle eines Kraftfahrzeuges**
Method of regulating the temperature inside a motor vehicle
Procédé de réglage de la température régnant à l'intérieur d'un véhicule automobile

(30) Priorität: 09.08.1995 DE 19529199
(43) Veröffentlichungstag der Anmeldung: 12.02.1997
(73) Patentinhaber: ADAM OPEL AG, 65423 Rüsselsheim (DE)
(72) Erfinder: Appel, Ralf, Dipl.-Ing., 64347 Griesheim (DE); Sünner, Tobias, Dr. rer. nat., 65428 Rüsselsheim (DE)

(56) Entgegenhaltungen:
- EP-A- 0 618 098
- US-A- 4 696 167
- US-A- 4 930 698
- US-A- 5 176 201

## Beschreibung

Die Erfindung bezieht sich gemäß Oberbegriff des Anspruchs 1 auf ein Verfahren zur Regelung der Innenraumtemperatur in der Fahrgastzelle eines Kraftfahrzeugs.

Die Innenraumtemperatur ist durch Nutzung von Heizungs- und Belüftungs- oder Klimaanlagen beeinflußbar. Verfahren der im Oberbegriff des Patentanspruchs 1 angegebenen Art sind bekannt.

Im VDI-Bericht Nr. 515, 1984, Seiten 161 bis 165 sowie Seiten 167 bis 173 sind derartige Verfahren beschrieben. Heizungs-, Belüftungs- bzw. Klimaanlagen werden so gesteuert, daß eine voreingestellte Solltemperatur im Fahrzeug schnell erreicht und dann konstant gehalten wird. Man ist bemüht, mittels zumindest eines Innenraumtemperatursensors einen repräsentativen Meßwert für die Innenraumtemperatur zu erfassen. Dabei besteht jedoch das Problem der Temperaturschichtung in der Fahrgastzelle, die von diversen Faktoren abhängig ist und eine Wichtung des Meßsignals erforderlich macht. Zur Erreichung des gewünschten Komforts ist auch eine Physiologie-Anpassung des Temperatur-Meßwertes oder -Sollwertes erforderlich.

Folgende Faktoren sind zu berücksichtigen:
- Die Außentemperatur (Umgebungstemperatur) ;
   eine Anhebung der Innenraumtemperatur (bedeutet Anhebung des Sollwertes oder Absenkung des Meßwertes) bei sinkenden Außentemperaturen wird als angenehm empfunden.
- Die Gebläseförderleistung (Luftgeschwindigkeit);
   eine Änderung der Lufttemperatur in Abhängigkeit von der Luftgeschwindigkeit ist komfortfördernd.
- Die Luftverteilung (Luftmengenverteilung auf verschiedene Luftauslässe im Fahrzeug) ;
   die Verfälschung des Meßwertes ist abhängig von der Luftverteilung in der Fahrgastzelle. Besonders warme oder kalte Luft kann beispielsweise nur in den Fuß- oder nur in den Kopfraum gelangen. Da der Sensorort konstant ist, muß der Meß- oder Sollwert gewichtet werden.

Bei luftgesteuerten Heizungsanlagen (die Luftaustrittstemperatur wird eingestellt, indem das Verhältnis zwischen Warm- und Kaltluft verändert wird. Dazu ist eine Mischluftklappe vorgesehen, deren Stellung bestimmt, wieviel Luft über einen Wärmetauscher und wieviel Luft kalt an dem Wärmetauscher vorbeigefördert wird. Die hinter dem Wärmetauscher entstehende Mischluft hat dann eine bestimmte Temperatur) besteht das Problem, daß die Wichtung des Temperaturmeßwertes in der Fahrgastzelle bzw. des Sollwertes trotz der Einbeziehung der genannten Faktoren fehlerbehaftet ist. Es kann kein repräsentativer und komfortoptimierter Vergleich zwischen Ist- und Sollwert stattfinden.

Es ist Aufgabe der Erfindung dem abzuhelfen und mit möglichst geringem Aufwand ein Verfahren zu schaffen, das auf der Basis eines exakt gewichteten Temperatur-Ist- oder -Sollwertes die Regelung der Temperatur im Innenraum eines Kraftfahrzeugs gestattet.

Zur Lösung dieser Aufgabe zeichnet sich das erfindungsgemäße Verfahren durch die im Patentanspruch 1 angegebenen Merkmale aus. Weitere Einzelheiten ergeben sich aus den Patentansprüchen 2 bis 4.

Es wurde festgestellt, daß die Luftschichtung (Temperaturverteilung) im Innenraum von Kraftfahrzeugen nicht allein von der eingestellten Luftverteilung abhängig ist. Aus den einzelnen Luftauslässen im Kraftfahrzeug strömt nicht Luft gleicher Temperatur aus. Es wäre nun möglich, die Ausströmtemperatur an den einzelnen Auslässen zu messen und diese Werte der Regelung zuzuführen, was jedoch sehr aufwendig ist.

Untersuchungen haben ergeben, daß die Temperatur an den einzelnen Luftauslässen entscheidend von der Mischluftklappenstellung abhängt. Dies gilt auch für die auftretenden Temperaturdifferenzen zwischen den einzelnen Auslässen. Die Mischluftklappe bestimmt, wieviel Luft durch einen Heizkern aufgeheizt wird und wieviel an diesem vorbeiströmt. Hinter dem Heizkern wird dann Mischluft gebildet. Dies geschieht aber nicht immer mit gleicher Qualität. Die Güte der Luftvermischung ist von der Mischluftklappenstellung abhängig, da diese die Strömungsverhältnisse beeinflußt. Bei unterschiedlicher Vermischung wird also Luft aus einem Luftmischraum an festliegenden Orten entnommen und zu den Auslässen gefördert. Es kann sein, daß bei einer Mischluftklappenstellung beispielsweise etwas wärmere Luft in den Fußraum gelangt als in den Kopfraum. Bei einer anderen Mischluftklappenstellung kehren sich diese Verhältnisse um, da eine andere Verwirbelung im Luftmischraum stattfindet. Dies ist nun auch noch davon abhängig, wieviel Luft zu den einzelnen Luftauslässen gefördert wird (Einstellung der Luftverteilung und der Gebläsedrehzahl).

Da dieser Effekt nunmehr erkannt wurde, kann er beherrscht werden. Es kann ein repräsentativer Vergleich zwischen einer gemessenen Innenraumtemperatur und einem Sollwert stattfinden, nachdem eine Wichtung erfolgte. Wird beispielsweise die Heizung in einer Weise betrieben, bei der im Kopfraum etwas kühlere Luft als im Fußraum ausströmt (dies ist ein gewünschter Effekt, der nunmehr auch gezielt beeinflußbar ist), kann ein Meßwert, der im Kopfraum erfaßt wurde, etwas angehoben werden oder der Sollwert wird etwas abgesenkt. Die Differenz zwischen Ist- und Sollwert kann dann Grundlage für die Regelung sein. Die Wichtungsfaktoren können aus einem Speicher entnommen werden, wobei ein oder mehrere Kennlinienfelder in dem Speicher (elektronischer Speicher) abgelegt sind. Zusätzlich kann die an sich bekannte Wichtung auf der Basis eines oder aller eingangs genannter Einflußfaktoren erfolgen.

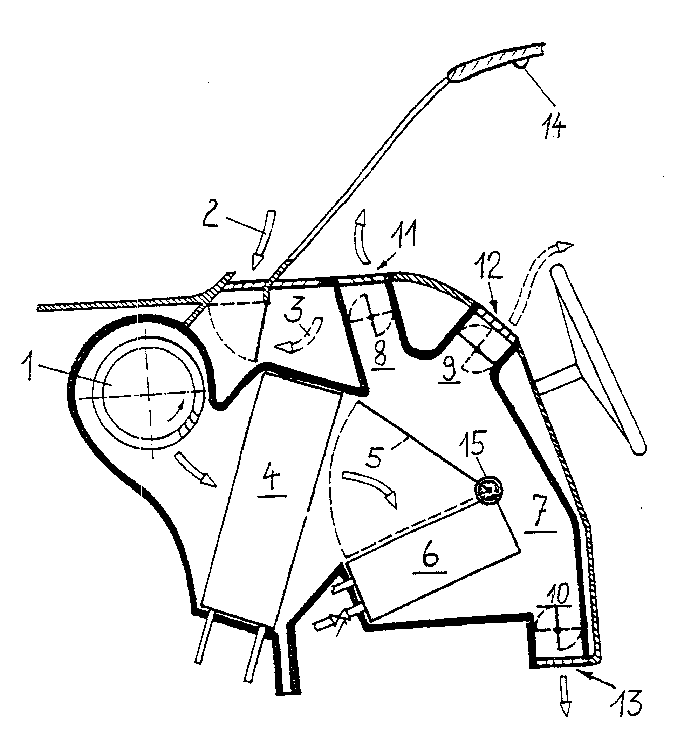

Zur Verdeutlichung des Verfahrens wird im folgenden Bezug genommen auf eine Zeichnung, in der eine Klimaanlage schematisch gezeigt ist, wobei die Zeichnung weiterentwickelt wurde aus einer Figur des VDI-Berichtes 515, 1984, Seite 169.

Ein Gebläse 1 fördert entweder Frischluft 2 und/oder Umluft 3 durch einen Verdampfer 4 bis in den Bereich einer Mischluftklappe 5. Je nach Stellung dieser Klappe 5 strömt die Luft über einen Heizkern 6 oder an diesem vorbei. Hinter der Mischluftklappe 5 und dem Heizkern 6 ist ein Luftmischraum 7 vorhanden, von wo aus Luftkanäle 8, 9, 10 zu Luftauslässen 11, 12, 13 abzweigen. Im Fahrzeuginnenraum (hier am Dach) ist ein Temperatursensor 14 angeordnet. Er ist belüftet und erfaßt seine Umgebungstemperatur.

Beispielsweise an der Schwenkachse der Mischluftklappe 5 ist ein Sensor 15 zur Erfassung der Mischluftklappenstellung vorhanden, was an sich bekannt ist.

Wie beschrieben, wurde nun erkannt, daß die Art und Weise der Verwirbelung und Vermischung der Luft im Luftmischraum 7 stark von der Mischluftklappenstellung abhängig ist. Beim Verfahren der Regelung der Innenraumtemperatur wird dies nunmehr berücksichtigt. Die mit Hilfe des Sensors 14 erfaßte Temperatur oder ein vorgegebener Temperatursollwert wird in Abhängigkeit von der Mischluftklappenstellung gewichtet. Ist die Mischluftklappe 5 ganz auf oder ganz zu, werden alle Luftauslässe 11, 12, 13 mit einer annähernd gleich temperierten Luft beschickt. Bei Teilöffnungsstellungen ergeben sich jedoch unterschiedliche Temperaturdifferenzen, wobei im allgemeinen dem Fußraumauslaß 13 die wärmere Luft zugeführt wird. Zusätzlich abhängig ist die Temperaturschichtung, wie bekannt, von der vorgewählten Luftverteilung, also der Öffnung der einzelnen Auslässe 11, 12, 13.

## Patentansprüche

1. Verfahren zur Regelung der Temperatur im Innenraum eines Kraftfahrzeugs unter Nutzung einer Heizungs- und Belüftungs- oder Klimaanlage, welche zumindest ein Gebläse (1), eine Luftmischklappe (5) zur Einstellung eines Mischungsverhältnisses zwischen Kalt- und Warmluft sowie mehrere variabel mit Luft beschickbare Luftauslässe (11, 12, 13) im Innenraum des Kraftfahrzeugs aufweist, bei dem an zumindest einem Ort im Innenraum die aktuelle Temperatur senscrisch erfaßt und mit einem vorgebbaren Sollwert verglichen wird, wobei vor dem Vergleich eine Wichtung der gemessenen Temperatur oder des Sollwertes erfolgt und in Abhängigkeit vom Vergleichsergebnis Einstellungen der Heizungs- und Belüftungs- oder Klimaanlage verändert werden, **dadurch gekennzeichnet, daß** die Wichtung der gemessenen Temperatur oder des Sollwertes zumindest in Abhängigkeit von der Mischluftklappenstellung erfolgt.

2. Verfahren nach Anspruch 1, **dadurch gekennzeichnet, daß** die Wichtung der gemessenen Innenraumtemperatur oder des Sollwertes in Abhängigkeit von einer gemessenen Temperatur in der Fahrzeugumgebung und/oder einer eingestellten Gebläseförderleistung und/oder eines erfaßten Luftverteilungsverhältnisses auf die einzelnen Luftauslässe (11, 12, 13) sowie in Abhängigkeit von der Mischluftklappenstellung erfolgt.

3. Verfahren nach Anspruch 1 und 2, **dadurch gekennzeichnet, daß** die Mischluftklappenstellung in an sich bekannter Weise erfaßt und der Regelung zugeführt wird, wobei dann aus einem abgespeicherten Kennfeld zu der jeweiligen Mischluftklappenstellung gehörende Wichtungsfaktoren entnommen und in die Regelung einbezogen werden.

4. Verfahren nach Anspruch 3, **dadurch gekennzeichnet, daß** die Wichtungsfaktoren zusätzlich neben der Mischluftklappenstellung von der eingestellten Luftverteilung abhängig sind.

## Claims

1. Method for regulating the temperature in the interior of a motor vehicle using a heating and ventilation or air conditioning system comprising at least one fan (1), an air mixing valve (5) for adjusting a mixture ratio between cold and hot air as well as several air outlets (11, 12, 13) which can be supplied variably with air in the interior of the motor vehicle, in which at at least one location in the interior the current temperature is detected by sensors and compared with a preset nominal value, wherein before comparison a weighting of the measured temperature or nominal value is carried out, and as a function of the result of comparison settings of the heating and ventilation or air conditioning system are varied, **characterised in that** the weighting of the measured temperature or nominal value is carried out at least as a function of the mixing air valve position.

2. Method according to claim 1, **characterised in that** the weighting of the measured interior temperature or nominal value is carried out as a function of a measured temperature in the vehicle environment and/or a set fan output and/or a detected air distribution ratio to the individual air outlets (11, 12, 13) and also as a function of the mixing air valve position.

3. Method according to claims 1 and 2, **characterised in that** the mixing air valve position is detected in a manner known in the art and fed to the regulation system, wherein then weighting factors belonging to the respective mixing air valve position are taken from a stored characteristic diagram and included in the regulation system.

4. Method according to claim 3, **characterised in that** the weighting factors depend additionally, apart from the mixing air valve position, on the set air distribution.

## Revendications

1. Procédé de réglage de la température régnant à l'intérieur d'un véhicule, utilisant une installation de chauffage, de ventilation ou de climatisation qui comprend au moins un ventilateur (1), un volet de mélange d'air (5) pour le réglage du rapport de mélange entre l'air froid et l'air chaud, ainsi que plusieurs sorties d'air (11, 12, 13) dans l'habitacle du véhicule, alimentées avec un débit d'air variable, dans lequel on mesure à l'aide de capteurs la température actuelle en au moins point de l'habitacle et on la compare à une valeur de consigne prédéterminée, la température mesurée ou la valeur de consigne étant pondérée avant la comparaison et des réglages de l'installation de chauffage, de ventilation ou de climatisation étant modifiés en fonction du résultat de la comparaison, **caractérisé en ce que** la pondération de la température mesurée ou de la valeur de consigne est réalisée au moins en fonction de la position du volet de mélange d'air.

2. Procédé selon la revendication 1, **caractérisé en ce que** la pondération de la température d'habitacle mesurée ou de la valeur de consigne est réalisée en fonction d'une température mesurée dans l'environnement du véhicule et/ou d'un débit de ventilateur réglé et/ou d'un rapport de répartition de l'air entre les différentes sorties d'air (11, 12, 13) ainsi qu'en fonction de la position du volet de mélange d'air.

3. Procédé selon les revendications 1 et 2, **caractérisé en ce qu'**on mesure d'une manière connue en soi la position du volet de mélange d'air et on la transmet à la régulation, des facteurs de pondération correspondant aux positions concernées du volet de mélange d'air étant ensuite prélevés sur un diagramme caractéristique et introduits dans la régulation.

4. Procédé selon la revendication 3, **caractérisé en ce que** les facteurs de pondération dépendent, en plus de la position du volet de mélange d'air, de la répartition d'air réglée.
